# EUROPÄISCHE PATENTSCHRIFT

(11) **EP 3 884 244 B1**
(45) Veröffentlichungstag und Bekanntmachung des Hinweises auf die Patenterteilung: **18.09.2024**
(21) Anmeldenummer: 19797702.8
(22) Anmeldetag: 31.10.2019
(51) Int. Cl.: G01D 3/08, G01D 21/00, G07C 3/08, G01F 15/06, G01D 3/00

(54) **FELDGERÄT MIT PROZESSSPEZIFISCHER ZUSTANDSÜBERWACHUNG**
FIELD DEVICE WITH PROCESS-SPECIFIC CONDITION MONITORING CAPABILITY
APPAREIL DE TERRAIN À SURVEILLANCE D'ÉTAT SPÉCIFIQUE AU PROCESSUS

(30) Priorität: 23.11.2018 DE 102018129590
(43) Veröffentlichungstag der Anmeldung: 29.09.2021
(73) Patentinhaber: Endress+Hauser Wetzer GmbH+Co. KG, 87484 Nesselwang (DE)
(72) Erfinder: JÖGEL, Thomas, 87509 Immenstadt (DE); SCHNALKE, Michael, 87484 Nesselwang (DE); WALSER, Björn, 87534 Oberstaufen (DE); SCHNEIDER, Kajetan, 87509 Immenstadt (DE); SCHMÖLZ, Fabian, 87669 Rieden am Forggensee (DE)
(74) Vertreter: Koslowski, Christine Adelheid
(86) Internationale Anmeldenummer: PCT/EP2019/079882
(87) Internationale Veröffentlichungsnummer: WO 2020/104169

(56) Entgegenhaltungen:
- JP-A- 2000 075 919
- US-A1- 2014 261 791
- US-B1- 9 915 375

## Beschreibung

Die vorliegende Erfindung betrifft eine Vorrichtung zur Bestimmung und/oder Überwachung zumindest einer Prozessgröße eines Mediums sowie ein Verfahren zum Betreiben einer erfindungsgemäßen Vorrichtung.

Derartige Feldgeräte dienen der Überwachung und/oder Bestimmung mindestens einer, beispielsweise chemischen oder physikalischen, Prozessgröße eines Mediums. Im Rahmen der vorliegenden Anmeldung werden im Prinzip alle Messgeräte als Feldgerät bezeichnet werden, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von Firmen der Endress + Hauser-Gruppe hergestellt und vertrieben.

Beispielsweise kann es sich bei dem Feldgerät um ein Füllstandsmessgerät, Durchflussmessgerät, Druck- und Temperaturmessgeräte, pH- und/oder pH-Redoxpotentialmessgerät, oder auch um ein Leitfähigkeitsmessgerät, handeln, welches der Erfassung der jeweils entsprechenden Prozessgrößen, wie einem Füllstand, einem Durchfluss, dem Druck, der Temperatur, einem pH-Wert, eines Redoxpotentials, oder einer Leitfähigkeit dient. Die jeweils zugrunde liegenden Messprinzipien sind aus dem Stand der Technik hinlänglich bekannt, und werden an dieser Stelle nicht einzeln angeführt. Bei Durchflussmessgeräten handelt es sich insbesondere um Coriolis-, Ultraschall-, Vortex-, thermische und/oder magnetisch induktiven Durchflussmessgeräte. Füllstandsmessgeräte wiederum sind insbesondere Mikrowellen-Füllstandsmessgeräte, Ultraschall-Füllstandsmessgeräte, zeitbereichsreflektometrische Füllstandsmessgeräte (TDR), radiometrische Füllstandsmessgeräte, kapazitive Füllstandsmessgeräte, konduktive Füllstandsmessgeräte und/oder temperatursensitive Füllstandsmessgeräte ausgestaltet. Bei Druckmessgeräten dagegen handelt es sich bevorzugt um sogenannte Absolut-, Relativ- oder Differenzdruckgeräte, während ein Temperaturmessgerät beispielsweise über ein Thermoelement oder einen temperaturabhängigen Widerstand zur Ermittlung der Temperatur verfügen kann.

Ein Feldgerät umfasst zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Zumindest die Elektronikeinheit des jeweiligen Feldgeräts ist typischerweise in einem Gehäuse mit einer Gehäuseeinführung angeordnet zur Einführung zumindest eines Anschlusskabels an das Feldgerät angeordnet.

Um einen Aufschluss über die Gesamtbetriebsdauer eines Feldgeräts er erhalten, werden Feldgeräte vielfach mit Betriebsstundenzählern ausgestattet. Auf diese Weise kann beispielsweise Aufschluss über einen möglicherweise notwendigen Austausch eines Feldgeräts im Prozess gewonnen werden.

Nun ist es aber so, dass Feldgeräte im fortlaufenden Betrieb im jeweiligen Prozess unterschiedlichsten Umgebungs- und/oder Prozessbedingungen ausgesetzt sind. Die jeweiligen Rahmenbedingungen können in diesem Zusammenhang erheblichen Einfluss auf die Lebensdauer des jeweiligen Messgeräts, bzw. einzelner Komponenten des Messgeräts haben. Eine anhand eines Betriebsstundenzählers gemachte Prognose bezüglich eines möglichen Ausfalls eines Geräts kann entsprechend mit einem großen Fehler behaftet sein. Ein Feldgerät zur Überwachung zumindest einer Prozessgröße eines Mediums ist in US 2014/261791 A1 offenbart, wobei eine Sensoreinheit, eine Elektronikeinheit, eine Zeiterfassungseinheit und eine Berechnungseinheit vorhanden sind, und wobei die Berechnungseinheit dazu ausgestaltet ist, zumindest anhand der von der Zeiterfassungseinheit erfassten Betriebsdauer und anhand zumindest einer Einflussgröße, welche Einflussgröße eine erreichbare Lebensdauer des Feldgeräts beeinflusst, zumindest eine Aussage über den Zustand zumindest einer Komponente der Vorrichtung zu machen.

Deshalb liegt der vorliegenden Erfindung die Aufgabe zugrunde, eine Möglichkeit bereitzustellen, mit der eine genauere Aussage über den Zustand eines Feldgeräts im fortlaufenden Betrieb gemacht werden kann.

Die Aufgabe wird gelöst durch eine Vorrichtung nach Anspruch 1 sowie durch ein Verfahren nach Anspruch 3. Hinsichtlich der Vorrichtung wird die Aufgabe gelöst durch eine Vorrichtung zur Bestimmung und/oder Überwachung zumindest einer Prozessgröße eines Mediums umfassend
- eine Sensoreinheit zur Erfassung eines Wertes für die Prozessgröße,
- eine Zeiterfassungseinheit zur Erfassung zumindest einer Betriebsdauer, und
- eine Berechnungseinheit, welche dazu ausgestaltet ist, zumindest anhand der von der Zeiterfassungseinheit erfassten Betriebsdauer und anhand zumindest einer die Betriebsdauer beeinflussenden Einflussgröße zumindest eine Aussage über den Zustand zumindest einer Komponente der Vorrichtung zu machen.

Die Zeiterfassungseinheit kann beispielsweise ein Betriebsstundenzähler sein. Bei herkömmlichen Betriebsstundenzählern wird in der Regel lediglich eine GesamtBetriebsdauer des jeweiligen Feldgeräts akkumuliert. Die jeweils mittels des Betriebsstundenzählers gewonnene Zeitinformation enthält keinerlei Angaben über die jeweiligen Prozessbedingungen, unter welchen das jeweilige Feldgerät verwendet wird.

Erfindungsgemäß wird dagegen im Zusammenhang mit einer Zustandsüberwachung, also bei der Ermittlung einer Aussage über den Zustand zumindest einer Komponente der Vorrichtung, zumindest eine Einflussgröße berücksichtigt. Derartige Einflussgrößen können einen erheblichen Einfluss auf den Zustand des Feldgeräts aufweisen. Die Zustandsüberwachung wird also nicht nur anhand der mittels der Zeiterfassungseinheit ermittelten Betriebsdauer durchgeführt, sondern unter Berücksichtigungen der jeweiligen Anwendung der Vorrichtung. Auf diese Weise können deutlich genauere und zuverlässigere Aussagen über den Zustand getroffen werden.

Erfindungsgemäß handelt es sich bei der Einflussgröße um einen Prozessparameter, eine Prozessgröße oder einen Umgebungsparameter, insbesondere um eine Temperatur, insbesondere eine Temperatur des Prozesses oder einer Komponente der Vorrichtung, um einen Druck, insbesondere einen Druck in einem Behältnis in welchem sich das Medium befindet, um einen Feuchtegehalt, insbesondere einen Feuchtegehalt der Umgebung, um Vibrationen, die im Bereich der Vorrichtung auftreten, um einen Durchfluss des Mediums, um einen pH-Wert des Mediums oder um eine Leitfähigkeit des Mediums.

Die jeweiligen Prozessparameter bzw. Prozesseigenschaften des Mediums und/oder Umgebungsparameter des jeweiligen Prozesses beeinflussen den Zustand des jeweils verwendeten Feldgeräts, erfindungsgemäß die erreichbare Lebensdauer, erheblich.

Beispielsweise kann ein Betreiben des Feldgeräts bei zu hohen Temperaturen, Drücken oder Feuchtegehalten zu einem Defekt, oder sogar zu einem Totalausfall des jeweiligen Geräts oder zumindest einzelner Komponenten des Geräts führen.

Erfindungsgemäß umfasst die Vorrichtung eine Messeinheit zur Erfassung eines Wertes für die Einflussgröße, insbesondere wobei die Messeinheit eine Vorrichtung zur Bestimmung einer Temperatur, eines Druckes, eines Feuchtegehalts, eine Vorrichtung zur Detektion von Vibrationen, oder zur Bestimmung eines Durchflusses, eines pH-Werts, oder einer Leitfähigkeit ist. In diesem Zusammenhang ist es einerseits denkbar, dass die Vorrichtung eine separate Messeinheit zur Erfassung eines Werts für die Einflussgröße aufweist. Je nach gewählter Sensoreinheit kann aber auch die Sensoreinheit selbst zur Erfassung eines Werts für die Einflussgröße dienen.

Andere Ausgestaltungen beinhalten ferner, dass ein Wert für die Einflussgröße unabhängig bzw. separat von der Vorrichtung erfasst wird, beispielsweise mittels eines anderen Feldgeräts oder mittels einer anderen Messeinheit.

Erfindungsgemäß umfasst die Vorrichtung zumindest ein erstes und ein zweites Modul, wobei die Berechnungseinheit dazu ausgestaltet ist, zumindest anhand der von der Zeiterfassungseinheit erfassten Betriebsdauer und anhand zumindest einer die Betriebsdauer beeinflussenden Einflussgröße zumindest eine erste Aussage über den Zustand des ersten Moduls der Vorrichtung und eine zweite Aussage über den Zustand des zweiten Moduls der Vorrichtung zu machen, oder wobei zwei Berechnungseinheiten vorhanden sind, wobei eine erste Berechnungseinheit dazu ausgestaltet ist, die erste Aussage über den Zustand des ersten Moduls zu machen, und wobei eine zweite Berechnungseinheit dazu ausgestaltet ist, die zweite Aussage über den Zustand des zweiten Moduls zu machen.

Auf diese Weise kann berücksichtigt werden, dass manche Einflussgrößen auf einzelne Komponenten einen größeren Einfluss haben als auf andere, oder dass bezüglich mancher Einflussgrößen nur einzelne Komponenten betroffen sind.

Erfindungsgemäß handelt es sich bei dem ersten Modul um die Sensoreinheit der Vorrichtung und bei dem zweiten Modul um eine Elektronikeinheit der Vorrichtung. Die Elektronik ist in der Regel außerhalb des Prozesses angeordnet, während die Sensoreinheit in vielen Fällen zumindest teilweise und/oder zeitweise mit dem jeweiligen Medium in Kontakt kommt. Es sind sowohl Feldgeräte in der sogenannten Kompaktbauweise, bei welcher die Elektronikeinheit direkt mit der Sensoreinheit verbunden ist, als auch solche, welche separat von der Sensoreinheit angeordnet sind, bekannt. Somit haben verschiedene Einflussgrößen in unterschiedlichem Maße Einfluss auf die unterschiedlichen Module. Beispielsweise ist es häufig so, dass die Elektronikeinheit und Sensoreinheit eines Feldgeräts für unterschiedliche maximale Betriebstemperaturen ausgestaltet sind.

In einer weiteren bevorzugten Ausgestaltung umfasst die Vorrichtung eine Anzeigeeinheit zur, insbesondere visuellen, Anzeige der zumindest einen Aussage über den Zustand der Komponente der Vorrichtung. In diesem Zusammenhang sind unterschiedlichste Anzeigeeinheiten denkbar, beispielsweise eine Anzeigeeinheit zur Anzeige einer Grafik, oder umfassend ein visuelles Anzeigeelement, beispielsweise in Form einer oder mehrerer, insbesondere farbiger, LEDs.

Die der Erfindung zugrunde liegende Aufgabe wird ferner gelöst durch ein Verfahren zum Betreiben einer erfindungsgemäßen Vorrichtung, wobei ein Wert für die Prozessgröße erfasst wird, eine Betriebsdauer erfasst wird, und wobei zumindest anhand der erfassten Betriebsdauer und anhand zumindest einer die Betriebsdauer beeinflussenden Einflussgröße zumindest eine Aussage über den Zustand zumindest einer Komponente der Vorrichtung gemacht wird.

In einer bevorzugten Ausgestaltung des Verfahrens handelt es sich bei der Aussage über den Zustand der zumindest einen Komponente der Vorrichtung um eine prozessspezifische erreichbare Lebensdauer zumindest der Komponente der Vorrichtung. Die prozessspezifische erreichbare Lebensdauer berücksichtigt neben der reinen Betriebsdauer den jeweiligen Einfluss der Einflussgröße. Für bestimmte Bereiche der jeweiligen Einflussgröße kann es zweckdienlich sein, eine Betriebsdauer zu begrenzen, um eine frühzeitige Schädigung der jeweiligen Komponente der Vorrichtung bzw. der gesamten Vorrichtung zu vermeiden.

In einer weiteren bevorzugten Ausgestaltung handelt es sich bei der Aussage über den Zustand der zumindest einen Komponente der Vorrichtung um eine Wahrscheinlichkeit für das Auftreten eines Defekts oder eines Ausfalls zumindest der Komponente der Vorrichtung.

In noch einer bevorzugten Ausgestaltung des Verfahrens handelt es sich bei der Aussage über den Zustand der zumindest einen Komponente der Vorrichtung um eine Belastung zumindest der Komponente der Vorrichtung.

Im Rahmen der vorliegenden Erfindung können eine oder mehrere Aussagen über den Zustand der Vorrichtung gemacht werden. Hierzu können jeweils die gleichen oder auch unterschiedliche Einflussgrößen berücksichtigt werden. Die unterschiedlichen Aussagen können sich ferner auf unterschiedliche Module der Vorrichtung beziehen.

Im Rahmen des erfindungsgemäßen Verfahrens ist es außerdem von Vorteil, wenn eine Aussage über den Zustand einer weiteren Vorrichtung, welche zur Überwachung des Mediums dient, gemacht wird. Es kann also auch ein Zustandsüberwachung weitere im Prozess angeordneter Feldgeräte erfolgen, die den gleichen Prozess- und/oder Umgebungsbedingungen ausgesetzt sind.

In einer bevorzugten Ausgestaltung werden zumindest ein erster und ein zweiter Wertebereich für die Einflussgröße vorgegeben. Dann kann insbesondere ein erster Wert für die Betriebsdauer der Vorrichtung entsprechend einem Wert für die Einflussgröße innerhalb des ersten Wertebereichs und ein zweiter Wert für die Betriebsdauer der Vorrichtung entsprechend einem Wert für die Einflussgröße innerhalb des zweiten Wertebereichs ermittelt werden. Erfindungsgemäß werden zumindest zwei, vorzugsweise drei, Wertebereiche vorgegeben. Für unterschiedliche Module der Vorrichtung und/oder für unterschiedliche Einflussgrößen oder Kombinationen von zumindest zwei Einflussgrößen kann ferner jeweils eine unterschiedliche Anzahl von Wertebereichen vorgegeben werden. Die einzelnen Wertebereiche können darüber hinaus gleich groß oder unterschiedlich große Intervalle für die jeweilige Einflussgröße umfassen.

In dieser Hinsicht ist es von Vorteil, wenn für jeden der zumindest zwei Wertebereiche eine Aussage über die zumindest eine Komponente der Vorrichtung gemacht wird. Alternativ ist es aber ebenso möglich und vorteilhaft, für zumindest einen Wertebereich ein Gewichtungsfaktor vorzugeben. Hinsichtlich des zumindest einen Gewichtungsfaktors wiederum ist es von Vorteil, wenn anhand der zumindest zwei Wertebereiche für die Einflussgröße und anhand des zumindest einen Gewichtungsfaktors die Aussage über die zumindest eine Komponente der Vorrichtung gemacht wird.

Es sei darauf verwiesen, dass sich die in Zusammenhang mit der erfindungsgemäßen Vorrichtung beschriebenen Ausgestaltungen sich mutatis mutandis auch auf das erfindungsgemäße Verfahren anwenden lassen und umgekehrt.

Die Erfindung sowie ihre vorteilhaften Ausgestaltungen werden im Folgenden anhand der Figuren Fig. 1 - Fig. 4 näher erläutert. Es zeigt:
Fig. 1 eine erste Ausgestaltung einer erfindungsgemäßen Vorrichtung mit einer Sensoreinheit, einer Zeiterfassungseinheit, einer Berechnungseinheit und einer zusätzlichen Messeinheit,
Fig. 2 eine zweite Ausgestaltung einer erfindungsgemäßen Vorrichtung mit zwei Berechnungseinheiten sowie einer Anzeigeeinheit,
Fig. 3 Beispiele für die Vorgabe verschiedener Wertebereiche für eine Einflussgröße, und
Fig. 4 eine erfindungsgemäße Vorrichtung in Form eines Thermometers mit zwei Modulen

In den Figuren sind gleiche Elemente jeweils mit demselben Bezugszeichen versehen.

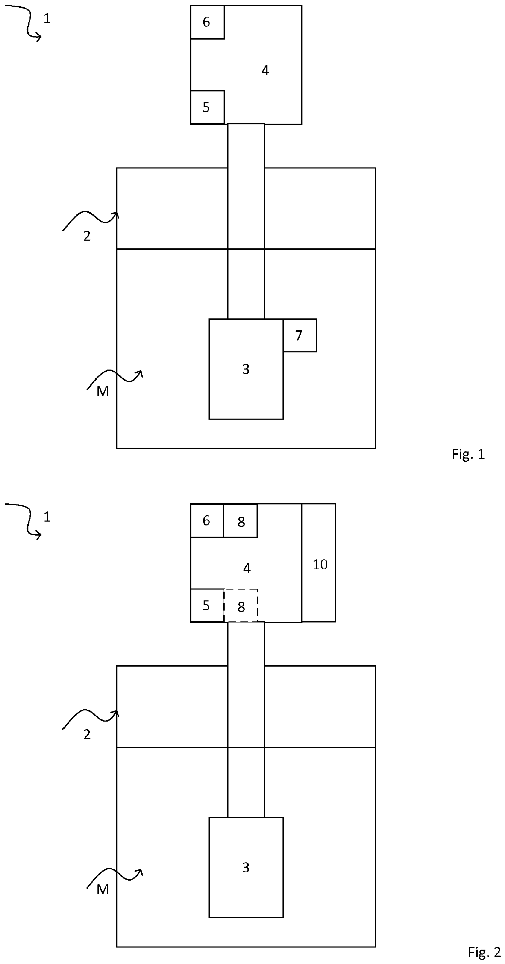

In Fig. 1 ist ein Feldgerät 1 zur Bestimmung und/oder Überwachung zumindest einer Prozessgröße P eines Mediums M gezeigt, wobei sich das Medium M in einem Behälter 2 befindet. Es versteht sich von selbst, dass sich ein Medium M im Rahmen der vorliegenden Erfindung aber ebenso gut in einem anderen Behältnis, beispielsweise einer Rohrleitung befinden, oder auch ohne Behältnis angeordnet sein kann.

Die Vorrichtung 1 weist eine Sensoreinheit 3 zur Erfassung eines Wertes für die jeweilige Prozessgröße P sowie eine Elektronikeinheit 4 auf. Im vorliegend gezeigten Beispiel handelt es sich um ein modulares Feldgerät 1 in Kompaktbauweise, wobei ein erstes Modul durch die Sensoreinheit 3 und ein zweites Modul durch die Elektronikeinheit 4 gegeben ist. Aber auch andere Arten von Feldgeräten fallen unter die vorliegende Erfindung.

In der Elektronikeinheit 4 ist eine Zeiterfassungseinheit 5 zur Erfassung zumindest einer Betriebsdauer t der Vorrichtung 1 angeordnet. Außerdem umfasst die Elektronikeinheit 4 eine Berechnungseinheit 6. Es sei darauf verwiesen, dass die Zeiterfassungseinheit 5 und Berechnungseinheit 6 jedoch keineswegs zwingend innerhalb der Elektronikeinheit 4 angeordnet sein müssen. Sie können vielmehr auch außerhalb derselben angeordnet sein.

Die Vorrichtung 1 umfasst zudem eine Messeinheit 7 zur Erfassung eines Wertes für die Einflussgröße E. Diese ist im vorliegenden Beispiel, wie die Messeinheit 3, so angeordnet, dass sie einen Prozessparameter p des Mediums M erfasst. In anderen Ausgestaltungen kann die Messeinheit auch zur Bestimmung eines Umgebungsparameters u, also außerhalb des Mediums M und/oder Behälters 2 ausgestaltet sein. Bei dem Prozessparameter p handelt es sich beispielsweise um die Temperatur, oder um den Druck des Mediums. Wie vorliegend beschrieben, kommen aber auch andere Prozessparameter in Betracht.

Erfindungsgemäß ist die Berechnungseinheit 6 dazu ausgestaltet, anhand der von der Zeiterfassungseinheit 5 erfassten Betriebsdauer t und anhand zumindest der die Betriebsdauer t beeinflussenden Einflussgröße E zumindest eine Aussage über den Zustand der Vorrichtung 1 zu machen. Bei dieser Aussage kann es sich beispielsweise um eine prozessspezifische Betriebsdauer tₚ der Vorrichtung 1, um eine Wahrscheinlichkeit für das Auftreten eines Defekts oder eines Ausfalls der Vorrichtung 1, oder um eine Belastung der Vorrichtung handeln.

Eine zweite mögliche Ausgestaltung für eine erfindungsgemäße Vorrichtung 1 ist in Fig. 2 skizziert. Im Unterschied zu Fig. 1 umfasst die Vorrichtung 1 eine erste 6 und eine zweite Berechnungseinheit 8. Die erste Berechnungseinheit 6 ist dann dazu ausgestaltet, zumindest anhand der von der Zeiterfassungseinheit 5 erfassten Betriebsdauer t und die zweite Berechnungseinheit 8 ist dazu ausgestaltet, anhand zumindest einer die Betriebsdauer t beeinflussenden Einflussgröße E eine erste Aussage über den Zustand der Sensoreinheit 3 und eine zweite Aussage über den Zustand der Elektronikeinheit 4 der Vorrichtung 1 zu machen. Die erste und zweite Berechnungseinheit 6, 8 können bei der Ermittlung der ersten und zweiten Aussage dieselbe E Einflussgröße oder unterschiedliche Einflussgrößen E1, E2 berücksichtigen. In anderen Ausgestaltungen können wiederum mehrere, insbesondere die beiden Aussagen betreffend die Elektronikeinheit 4 und die Sensoreinheit 3, mittels derselben Berechnungseinheit 6 ermittelt werden. Auch ist es denkbar, dass für jedes Modul 3,4 jeweils eine eigene Zeiterfassungseinheit 5,9 [die zweite Zeiterfassungseinheit ist gestrichelt eingezeichnet] vorhanden sind.

Außerdem umfasst die Vorrichtung 1 gemäß Fig. 2 eine Anzeigeeinheit 10. Diese dient der, insbesondere visuellen, Anzeige der zumindest einen Aussage über den Zustand der Vorrichtung 1. Für die hier gezeigte Ausgestaltung ist die Anzeigeeinheit 10 ebenfalls der Elektronikeinheit 4 zugeordnet. In anderen Ausgestaltungen kann es sich bei der Anzeigeeinheit aber auch um eine separate Einheit handeln.

Es sei darauf verwiesen, dass die einzelnen Komponenten der Vorrichtungen gemäß den Figuren Fig. 1 und Fig. 2 in anderen Ausgestaltungen auch anders miteinander kombinierbar sind. Die gezeigten Ausführungen sind also lediglich als einzelne mögliche Beispiele zu verstehen.

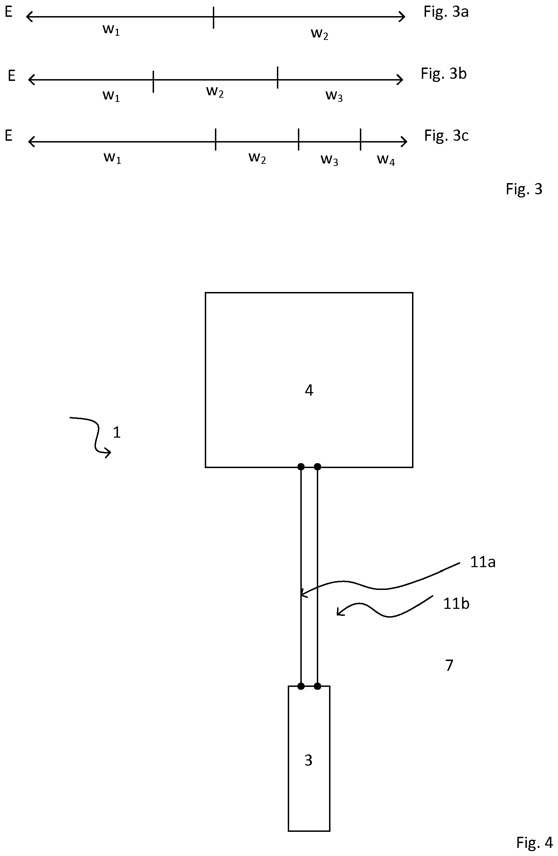

In Fig. 3 sind mögliche Beispiele für die Vorgabe einzelner Wertebereiche für eine erfindungsgemäße Vorrichtung 1 bzw. für ein erfindungsgemäßes Verfahren illustriert. Für die Beispiele gemäß Fig. 3a und 3b wurden zwei w₁, w₂ bzw. drei äquidistante Wertebereiche w₁-w₃ für die Einflussgröße E vorgegeben. Im Falle der Fig. 3c sind die dagegen vier unterschiedlich große Wertebereiche w₁-w₄ vorgegeben. Die Wertebereiche w werden dabei bevorzugt in Abhängigkeit des Einflusses E auf die Betriebsdauer t der Vorrichtung 1 vorgegeben bzw. entsprechend ausgewählt. Es ist dann beispielsweise denkbar, für jeden der Wertebereiche w je eine Aussage über die Vorrichtung 1 zu machen, oder es kann für zumindest einen der Wertebereiche w ein Gewichtungsfaktor vorgegeben werden. Dann ist es wiederum möglich, anhand der zumindest zwei Wertebereiche w₁, w₂ für die Einflussgröße E und anhand des zumindest einen Gewichtungsfaktors die Aussage über die Vorrichtung zu machen.

Denkbar ist in anderen Ausgestaltungen zudem auch, dass für die unterschiedlichen Module 3,4 der Vorrichtung 1 unterschiedlich viele Wertebereiche w, oder für unterschiedliche Einflussgrößen E unterschiedliche Wertebereiche w vorgegeben werden. Die verschiedenen Aussagen können dabei in einer einzigen Berechnungseinheit 6 oder in mehreren Berechnungseinheiten 6,8 ermittelt werden.

Es sei darauf verwiesen, dass für die in den Figuren Fig. 1- Fig.3 gezeigten Ausgestaltungen anstelle von Aussagen über die gesamte Vorrichtung 1 auch unterschiedliche Aussagen für unterschiedliche Module, beispielsweise eine Elektronikeinheit 4 oder eine Sensoreinheit 3, gemacht werden können.

Eine weitere beispielhafte Ausgestaltung der vorliegenden Erfindung mit einer Vorrichtung in Form eines Thermometers 1 ist in Fig. 4 illustriert. Das Thermometer 1 umfasst eine Sensoreinheit 3 in Form eines Widerstandselements, welche über zwei Anschlussleitungen 11a, 11b mit der Elektronikeinheit 4 verbunden sind. In anderen Ausgestaltungen kann beispielsweise auch ein Sensorelement 3 mit einem Thermocouple verwendet werden. Im Prinzip können alle aus dem Stand der Technik bekannten, in Zusammenhang mit Thermometern 1 verwendeten, Sensoreinheiten 3 zum Einsatz kommen.

Für die beispielhafte Ausgestaltung gemäß Fig. 4 handelt es sich sowohl bei der Prozessgröße P als auch bei der Einflussgröße E um die Temperatur T des Mediums. Entsprechend bedarf es für die Vorrichtung 1 aus Fig. 4 keiner separaten Messeinheit 7.

Üblicherweise sind im Falle von Thermometern 1 unterschiedliche Maximaltemperaturen für die Sensoreinheit 3 bzw. für die Elektronikeinheit 4 zugelassen. Ein Betreiben des jeweiligen Moduls, also der Sensoreinheit 3 bzw. der Elektronikeinheit 4 bei vergleichsweise hohen Temperaturen T, d.h. bei Temperaturen nahe der maximal zulässigen Betriebstemperatur, führt zu einer erhöhten Wahrscheinlichkeit für das Auftreten von Defekten der jeweiligen Module 3,4 bzw. kann einen Austausch des jeweiligen Moduls zu einem früheren Zeitpunkt notwendig machen, als in einem Fall, in welchem das Thermometer 1 lediglich bei niedrigeren Temperaturen T betrieben wird. Insoweit stellt die Temperatur T des Mediums eine die Betriebsdauer t der Vorrichtung 1 beeinflussende Einflussgröße E dar. Im Rahmen der vorliegenden Erfindung kann für die gesamte Vorrichtung 1, oder separat für unterschiedliche Module 3,4 und/oder für unterschiedliche Wertebereiche jeweils eine Aussage gemacht werden. Oder es können für die unterschiedlichen Module 3,4 und/oder Wertebereiche jeweils Gewichtungsfaktoren ermittelt werden. Anhand der verschiedenen Aussagen oder anhand der einzelnen Aussagen und der entsprechenden Gewichtungsfaktoren kann dann beispielsweise eine prozessspezifische Betriebsdauer tₚ eines der Module 3,4 oder der Vorrichtung 1 ermittelt werden.

Vorteilhaft ermöglicht die vorliegende Erfindung eine zuverlässige und genaue Zustandsüberwachung auf Basis der Betriebsdauer t der Vorrichtung und anhand zumindest einer die Betriebsdauer t beeinflussenden Einflussgröße.

### Bezugszeichen

- 1: Vorrichtung
- 2: Behälter
- 3: Sensoreinheit
- 4: Elektronikeinheit
- 5: Zeiterfassungseinheit
- 6: Berechnungseinheit
- 7: Messeinheit
- 8: Zweite Berechnungseinheit
- 9: Zweite Zeiterfassungseinheit
- 10: Anzeigeeinheit
- 11: 11a, 11bAnschlussleitungen

- M: Medium
- P: Prozessgröße
- E: Einflussgröße
- p: Prozessparameter
- u: Umgebungsparameter
- T: Temperatur
- w: Wertebereiche
- t: Betriebsdauer
- tₚ: prozessspezifische Betriebsdauer

## Patentansprüche

1. Feldgerät (1) zur Bestimmung und/oder Überwachung zumindest einer Prozessgröße (P) eines Mediums (M) umfassend
- eine Sensoreinheit (3) zur Erfassung eines Wertes für die Prozessgröße (P), welche zumindest teilweise und zumindest zeitweise mit dem Medium (M) bei der Bestimmung und/oder Überwachung der Prozessgröße in Berührung kommt
- eine Elektronikeinheit (4), welche der Signalerfassung, der Signalauswertung und/oder der Signalspeisung dient und in einem Gehäuse mit einer Gehäuseeinführung zur Einführung zumindest eines Anschlusskabels an das Feldgerät angeordnet ist,
- eine Zeiterfassungseinheit (5) in Form eines Betriebsstundenzählers zur Erfassung zumindest einer Betriebsdauer (t),
und
- eine Berechnungseinheit (6), welche dazu ausgestaltet ist, zumindest anhand der von der Zeiterfassungseinheit (5) erfassten Betriebsdauer (t) und anhand zumindest einer Einflussgröße (E), welche Einflussgröße (E) eine erreichbare Lebensdauer des Feldgeräts beeinflusst, zumindest eine Aussage über den Zustand zumindest einer Komponente der Vorrichtung (1) zu machen,
wobei es sich bei der Einflussgröße (E) um einen Prozessparameter (p) des Mediums (M), die Prozessgröße (P) des Mediums (M) oder einen Umgebungsparameter (u) handelt,
wobei der Prozessparameter (p) des Mediums (M), die Prozessgröße (P) des Mediums (M) und der Umgebungsparameter (u) ausgewählt ist aus der Liste der folgenden:
- eine Temperatur (T) des Prozesses oder einer Komponente des Feldgeräts (1),
- ein Druck in einem Behältnis (2) in welchem sich das Medium (M) befindet,
- ein Feuchtegehalt, insbesondere ein Feuchtegehalt der Umgebung,
- Vibrationen, die im Bereich des Feldgeräts (1) auftreten,
- ein Durchfluss des Mediums (M),
- ein pH-Wert des Mediums (M), und
- eine Leitfähigkeit des Mediums (M),
wobei das Feldgerät (1) zumindest eine Messeinheit (7) zur Erfassung eines Wertes für die Einflussgröße (E) umfasst, wobei die Messeinheit (7) eine Vorrichtung zur Bestimmung einer Temperatur (T), eines Druckes, eines Feuchtegehalts, eine Vorrichtung zur Detektion von Vibrationen, oder zur Bestimmung eines Durchflusses, eines pH-Werts, oder einer Leitfähigkeit ist,
und wobei die Messeinheit (7) als eine separate Messeinheit (7) zur Erfassung eines Werts für die Einflussgröße (E) ausgebildet ist oder die Sensoreinheit (3) als die Messeinheit (7) zur Erfassung eines Werts für die Einflussgröße (E) dient,
wobei die Berechnungseinheit (6) dazu ausgestaltet ist, zumindest anhand der von der Zeiterfassungseinheit (5) erfassten Betriebsdauer (t) und anhand zumindest der Einflussgröße (E) zumindest eine erste Aussage über den Zustand der Sensoreinheit (3) und eine zweite Aussage über den Zustand der Elektronikeinheit (4) zu machen, oder
wobei zwei Berechnungseinheiten (6,8) vorhanden sind, wobei eine erste Berechnungseinheit (6) dazu ausgestaltet ist, zumindest anhand der von der Zeiterfassungseinheit erfassten Betriebsdauer und anhand zumindest der Einflussgröße eine erste Aussage über den Zustand der Sensoreinheit (3) zu machen, und wobei eine zweite Berechnungseinheit (8) dazu ausgestaltet ist, zumindest anhand der von der Zeiterfassungseinheit erfassten Betriebsdauer und anhand zumindest der Einflussgröße eine zweite Aussage über den Zustand der Elektronikeinheit (4) zu machen.

2. Feldgerät (1) nach einem der vorherigen Ansprüche,
umfassend eine Anzeigeeinheit (10) zur, insbesondere visuellen, Anzeige der zumindest einen Aussage über den Zustand der Komponente des Feldgeräts (1).

3. Verfahren zum Betreiben eines Feldgeräts (1) nach einem der vorherigen Ansprüche, wobei
- ein Wert für die Prozessgröße (P) erfasst wird,
- eine Betriebsdauer (t) erfasst wird,
und
zumindest anhand der erfassten Betriebsdauer (t) und anhand zumindest der Einflussgröße (E) zumindest eine Aussage über den Zustand zumindest einer Komponente des Feldgeräts (1) gemacht wird, wobei es sich bei der Einflussgröße (E) um einen Prozessparameter (p) des Mediums (M), die Prozessgröße (P) des Mediums (M) oder einen Umgebungsparameter (u) handelt,
wobei der Prozessparameter (p) des Mediums (M), die Prozessgröße (P) des Mediums (M) und der Umgebungsparameter (u) ausgewählt ist aus der Liste der folgenden:
- eine Temperatur (T) des Prozesses oder einer Komponente des Feldgeräts (1),
- ein Druck in einem Behältnis (2) in welchem sich das Medium (M) befindet,
- ein Feuchtegehalt, insbesondere ein Feuchtegehalt der Umgebung,
- Vibrationen, die im Bereich des Feldgeräts (1) auftreten,
- ein Durchfluss des Mediums (M),
- ein pH-Wert des Mediums (M), und
- eine Leitfähigkeit des Mediums (M)
wobei zumindest anhand der von der Zeiterfassungseinheit (5) erfassten Betriebsdauer (t) und anhand zumindest der Einflussgröße (E) zumindest eine erste Aussage über den Zustand der Sensoreinheit (3) und eine zweite Aussage über den Zustand der Elektronikeinheit (4) gemacht wird.

4. Verfahren nach Anspruch 3,
wobei es sich bei der Aussage über den Zustand der zumindest einen Komponente des Feldgeräts (1) um eine prozessspezifische erreichbare Lebensdauer (tₚ) zumindest der Komponente des Feldgeräts handelt.

5. Verfahren nach Anspruch 3 oder 4,
wobei es sich bei der Aussage über den Zustand der zumindest einen Komponente des Feldgeräts (1) um eine Wahrscheinlichkeit für das Auftreten eines Defekts oder eines Ausfalls zumindest der Komponente des Feldgeräts (1) handelt.

6. Verfahren nach einem der Ansprüche 3 bis 5,
wobei es sich bei der Aussage über den Zustand der zumindest einen Komponente des Feldgeräts (1) um eine Belastung zumindest der Komponente des Feldgeräts (1) handelt.

7. Verfahren nach einem der Ansprüche 3 bis 6,
wobei eine Aussage über den Zustand eines weiteren im Prozess angeordneten Feldgeräts, gemacht wird, welches weitere Feldgerät zur Überwachung des Mediums (M) dient und das den gleichen Prozess- und/oder Umgebungsbedingungen wie das Feldgerät ausgesetzt ist.

8. Verfahren nach einem der Ansprüche 3 bis 7,
wobei zumindest ein erster und ein zweiter Wertebereich (w,w₁,w₂) für die Einflussgröße (E) vorgegeben werden.

9. Verfahren nach Anspruch 8,
wobei für jeden der zumindest zwei Wertebereiche (w,w₁,w₂) eine Aussage über die zumindest eine Komponente des Feldgeräts (1) gemacht wird.

10. Verfahren nach Anspruch 8,
wobei für zumindest einen Wertebereich (w,w₁,w₂) ein Gewichtungsfaktor vorgegeben wird.

11. Verfahren nach Anspruch 10,
wobei anhand der zumindest zwei Wertebereiche (w,w₁,w₂) für die Einflussgröße (E) und anhand des zumindest einen Gewichtungsfaktors die Aussage über die zumindest eine Komponente des Feldgeräts (1) gemacht wird.

## Claims

1. A field device (1) for determining and/or monitoring at least one process variable (P) of a medium (M), comprising:
- A sensor unit (3) for detecting a value for the process variable (P), which comes into contact with the medium (M) at least partially and at least occasionally when determining and/or monitoring the process variable,
- an electronic unit (4), which is used to detect, analyze, and/or provide signals and is arranged in a housing with a housing feedthrough to conduct at least one connecting cable toward the field device,
- a time recording unit (5) in the form of an operating hours counter for recording at least one operating time (t),
and
- a calculation unit (6), which is configured to make at least one statement about the status of at least one component of the device (1) at least on the basis of the operating time (t) recorded by the time recording unit (5) and on the basis of at least one influencing variable (E), said influencing variable (E) affecting the service life which can be achieved by the field device,
wherein the influencing variable (E) is a process parameter (p) of the medium (M), the process variable (P) of the medium (M), or an environmental parameter (u),
wherein the process parameter (p) of the medium (M), the process variable of the medium (M), and the environmental parameter (u) are selected from the following list:
- A temperature (T) of the process or of a component of the field device (1),
- a pressure in a container (2) in which the medium (M) is located,
- a moisture content, in particular a moisture content of the environment,
- vibrations which occur in the vicinity of the field device (1),
- a flow of the medium (M),
- a pH value of the medium (M), and
- a conductivity of the medium (M),
wherein the field device (1) comprises at least one measuring unit (7) for recording a value for the influencing variable (E), wherein the measuring unit (7) is a device for determining a temperature (T), a pressure, or a moisture content, a device for detecting vibrations, or for determining a flow, a pH value, or a conductivity,
and wherein the measuring unit (7) is configured as a separate measuring unit (7) for recording a value for the influencing variable (E), or the sensor unit (3) acts as the measuring unit (7) for recording a value for the influencing variable (E),
wherein the calculation unit (6) is configured to make at least a first statement about the status of the sensor unit (3) and a second statement about the status of the electronic unit (4) at least on the basis of the operating time (t) recorded by the time recording unit (5) and on the basis of at least the influencing variable (E),
or
wherein two calculation units (6,8) are present, wherein a first calculation unit (6) is configured to make a first statement about the status of the sensor unit (3) at least on the basis of the operating time recorded by the time recording unit and on the basis of at least the influencing variable, and wherein a second calculation unit (8) is configured to make a second statement about the status of the electronic unit (4) at least on the basis of the operating time recorded by the time recording unit and on the basis of at least the influencing variable.

2. The field device (1) as claimed in one of the preceding claims,
comprising a display unit (10) for providing a display, in particular a visual one, of the at least one statement about the status of the component of the field device (1).

3. A method for operating a field device (1) as claimed in one of the preceding claims, wherein
- a value for the process variable (P) is recorded,
- an operating time (t) is recorded,
and
at least one statement about the status of at least one component of the field device (1) is made at least on the basis of the recorded operating time (t) and on the basis of at least the influencing variable (E), wherein the influencing variable (E) is a process parameter (p) of the medium (M), the process variable (P) of the medium (M), or an environmental parameter (u), wherein the process parameter (p) of the medium (M), the process variable of the medium (M), and the environmental parameter (u) are selected from the following list:
- A temperature (T) of the process or of a component of the field device (1),
- a pressure in a container (2) in which the medium (M) is located,
- a moisture content, in particular a moisture content of the environment,
- vibrations which occur in the vicinity of the field device (1),
- a flow of the medium (M),
- a pH value of the medium (M), and
- a conductivity of the medium (M),
wherein at least a first statement about the status of the sensor unit (3) and a second statement about the status of the electronic unit (4) are made at least on the basis of the operating time (t) recorded by the time recording unit (5) and on the basis of at least the influencing variable (E).

4. The method as claimed in claim 3,
wherein the statement about the status of the at least one component of the field device (1) relates to a service life (tp) of at least the component of the field device which can be achieved in this specific process.

5. The method as claimed in claim 3 or 4,
wherein the statement about the status of the at least one component of the field device (1) relates to the likelihood of a defect or a failure occurring in at least the component of the field device (1).

6. The method as claimed in one of claims 3 to 5,
wherein the statement about the status of the at least one component of the field device (1) relates to a loading of at least the component of the field device (1).

7. The method as claimed in one of claims 3 to 6,
wherein a statement is made about the status of a further field device arranged in the process, said further field device being used to monitor the medium (M) and being exposed to the same process and/or environmental conditions as the field device.

8. The method as claimed in one of claims 3 to 7,
wherein at least a first and a second range of values (w,w₁,w₂) is specified for the influencing variable (E).

9. The method as claimed in claim 8,
wherein a statement about the at least one component of the field device (1) is made for each of the at least two ranges of values (w,w₁,w₂).

10. The method as claimed in claim 8,
wherein a weighting factor is specified for at least one range of values (w,w₁,w₂).

11. The method as claimed in claim 10,
wherein the statement about the at least one component of the field device (1) is made on the basis of the at least two ranges of values (w,w₁,w₂) for the influencing variable (E) and on the basis of the at least one weighting factor.

## Revendications

1. Appareil de terrain (1) destiné à la détermination et/ou à la surveillance d'au moins une grandeur de process (P) d'un produit (M), lequel appareil de terrain comprend :
- une unité de capteur (3) destinée à l'acquisition d'une valeur pour la grandeur de process (P), laquelle unité vient au moins partiellement et au moins temporairement en contact avec le produit (M) lors de la détermination et/ou de la surveillance de la grandeur de process,
- une unité électronique (4), laquelle sert à l'acquisition de signaux, à l'évaluation de signaux et/ou à l'alimentation de signaux et laquelle est disposée dans un boîtier avec une introduction de boîtier pour l'introduction d'au moins un câble de raccordement à l'appareil de terrain,
- une unité d'acquisition de temps (5) sous forme d'un compteur d'heures de fonctionnement pour l'acquisition d'au moins une durée de fonctionnement (t), et
- une unité de calcul (6), laquelle est conçue pour donner au moins une information sur l'état d'au moins un composant de l'appareil (1) au moins à l'aide de la durée de fonctionnement (t) acquise par l'unité d'acquisition de temps (5) et à l'aide d'au moins une grandeur d'influence (E), laquelle grandeur d'influence (E) influence une durée de vie réalisable de l'appareil de terrain,
la grandeur d'influence (E) étant un paramètre de process (p) du produit (M), la grandeur de process (P) du produit (M) ou un paramètre ambiant (u),
le paramètre de process (p) du produit (M), la grandeur de process (P) du produit (M) et le paramètre ambiant (u) étant choisis parmi les éléments de la liste suivante :
- une température (T) du process ou d'un composant de l'appareil de terrain (1),
- une pression dans un réservoir (2) dans lequel se trouve le produit (M),
- une teneur en humidité, notamment une teneur en humidité de l'environnement,
- des vibrations qui se produisent dans la zone de l'appareil de terrain (1),
- un débit du produit (M),
- une valeur de pH du produit (M), et
- une conductivité du produit (M)
l'appareil de terrain (1) comprenant au moins une unité de mesure (7) destinée à l'acquisition d'une valeur pour la grandeur d'influence (E), l'unité de mesure (7) étant un dispositif destiné à la détermination d'une température (T), d'une pression, d'une teneur en humidité, un dispositif destiné à la détection de vibrations, ou à la détermination d'un débit, d'une valeur de pH, ou d'une conductivité,
et l'unité de mesure (7) étant conçue comme une unité de mesure séparée (7) pour l'acquisition d'une valeur pour la grandeur d'influence (E) ou l'unité de capteur (3) servant d'unité de mesure (7) pour l'acquisition d'une valeur pour la grandeur d'influence (E), l'unité de calcul (6) étant conçue pour donner, au moins à l'aide de la durée de fonctionnement (t) acquise par l'unité d'acquisition de temps (5) et à l'aide d'au moins la grandeur d'influence (E), au moins une première information sur l'état de l'unité de capteur (3) et une deuxième information sur l'état de l'unité électronique (4), ou
deux unités de calcul (6, 8) étant présentes, une première unité de calcul (6) étant conçue pour donner une première information sur l'état de l'unité de capteur (3) au moins à l'aide de la durée de fonctionnement acquise par l'unité d'acquisition de temps et au moins à l'aide de la grandeur d'influence, et une deuxième unité de calcul (8) étant conçue pour donner une deuxième information sur l'état de l'unité électronique (4) au moins à l'aide de la durée de fonctionnement acquise par l'unité d'acquisition de temps et au moins à l'aide de la grandeur d'influence.

2. Appareil de terrain (1) selon l'une des revendications précédentes,
comprenant une unité d'affichage (10) pour l'affichage, notamment visuel, de l'au moins une information concernant l'état du composant de l'appareil de terrain (1).

3. Procédé destiné à l'exploitation d'un appareil de terrain (1) selon l'une des revendications précédentes,
pour lequel
- on saisit une valeur pour la grandeur de process (P),
- on saisit une durée de fonctionnement (t),
et
au moins à l'aide de la durée de fonctionnement (t) saisie et à l'aide d'au moins la grandeur d'influence (E), on obtient au moins une information sur l'état d'au moins un composant de l'appareil de terrain (1), la grandeur d'influence (E) étant un paramètre de process (p) du produit (M), la grandeur de process (P) du produit (M) ou un paramètre ambiant (u), le paramètre de process (p) du produit (M), la grandeur de process (P) du produit (M) et le paramètre ambiant (u) étant choisis parmi les éléments de la liste suivante :
- une température (T) du process ou d'un composant de l'appareil de terrain (1),
- une pression dans un réservoir (2) dans lequel se trouve le produit (M),
- une teneur en humidité, notamment une teneur en humidité de l'environnement,
- des vibrations qui se produisent dans la zone de l'appareil de terrain (1),
- un débit du produit (M),
- une valeur de pH du produit (M), et
- une conductivité du produit (M)
au moins une première information sur l'état de l'unité de capteur (3) et une deuxième indication sur l'état de l'unité électronique (4) étant données au moins à l'aide de la durée de fonctionnement (t) acquise par l'unité d'acquisition de temps (5) et au moins à l'aide de la grandeur d'influence (E).

4. Procédé selon la revendication 3,
pour lequel, en ce qui concerne l'information sur l'état de l'au moins un composant de l'appareil de terrain (1), il s'agit d'une durée de vie atteignable (tₚ) spécifique au process au moins du composant de l'appareil de terrain.

5. Procédé selon la revendication 3 ou 4,
pour lequel, en ce qui concerne l'information relative à l'état de l'au moins un composant de l'appareil de terrain (1), il s'agit d'une probabilité d'apparition d'un défaut ou d'une défaillance au moins du composant de l'appareil de terrain (1).

6. Procédé selon l'une des revendications 3 à 5,
pour lequel l'information concernant l'état de l'au moins un composant de l'appareil de terrain (1) est une charge au moins du composant de l'appareil de terrain (1).

7. Procédé selon l'une des revendications 3 à 6,
pour lequel une information est donnée sur l'état d'un autre appareil de terrain disposé dans le process, lequel autre appareil de terrain sert à la surveillance du produit (M) et lequel est exposé aux mêmes conditions de process et/ou d'environnement que l'appareil de terrain.

8. Procédé selon l'une des revendications 3 à 7,
pour lequel au moins une première et une deuxième gamme de valeurs (w, w₁, w₂) sont prédéfinies pour la grandeur d'influence (E).

9. Procédé selon la revendication 8,
pour lequel, pour chacune des au moins deux gammes de valeurs (w, w₁, w₂), une information est donnée concernant l'au moins un composant de l'appareil de terrain (1).

10. Procédé selon la revendication 8,
pour lequel un facteur de pondération est prédéfini pour au moins une gamme de valeurs (w, w₁, w₂).

11. Procédé selon la revendication 10,
pour lequel l'information concernant l'au moins un composant de l'appareil de terrain (1) est donnée à l'aide des au moins deux gammes de valeurs (w, w₁, w₂) pour la grandeur d'influence (E) et à l'aide de l'au moins un facteur de pondération.
